# EUROPEAN PATENT SPECIFICATION

(11) **EP 1 992 545 B1**
(45) Date of publication and mention of the grant of the patent: **21.07.2010**
(21) Application number: 08154701.0
(22) Date of filing: 17.04.2008
(51) Int. Cl.: B62D 3/12, F16H 55/28

(54) **Rack and pinion steering apparatus having rack bearing waer compensation with damping**
Zahnstangengelenkvorrichtung mit Verschleißausgleich für das Stangenlager mit Dämpfung
Appareil de direction à crémaillère à compensation d'usure du palier de la crémaillère avec amortissement

(30) Priority: 14.05.2007 US 930062 P; 24.05.2007 US 931521 P
(43) Date of publication of application: 19.11.2008
(73) Proprietor: Delphi Technologies, Inc., Troy, Michigan 48007 (US)
(72) Inventor: Dodak, Tony Michael, Montrose, MI 48457 (US); Champagne, Anthony J., Saginaw, MI 48603 (US); Eickholt, Michael A., New Lothrop, MI 48460 (US)
(74) Representative: Manitz, Finsterwald & Partner GbR

(56) References cited:
- EP-A- 0 631 066
- EP-A- 1 738 989
- WO-A-2007/100815
- GB-A- 655 130
- GB-A- 2 333 079
- US-A1- 2007 137 955

## Description

### TECHNICAL FIELD

The subject invention generally relates to a power steering apparatus for a vehicle.

### BAKGROUND OF THE INVENTION

Power steering systems having a rack and a pinion are utilized in nearly all of today's vehicles to steer at least two of the wheels of a vehicle. The steering wheel of the vehicle is typically connected to a pinion gear that is in meshing engagement with a rack. The rack and pinion is supported in a housing and the rack translates the rotational movement of the pinion and steering wheel into a linear movement. The linear movement of the rack is translated to the steerable wheels of the car typically by a tie rod connected to each of the steerable wheels. In addition, power steering systems typically include an assisting force that provides a pressure or a force in proportion to the rotation of the steering wheel for assisting the linear movement of the rack. The assisting force is an additional system that may be a hydraulic system utilizing a hydraulic piston coupled to the rack or electrical system utilizing an electric motor to supply the assisting force to the rack. In either system there is a desire to properly support and allow for adjustments to the meshing engagement between the pinion and the rack during the operational life of the power steering apparatus.

The rack can be supported in the housing by a bearing to reduce the frictional resistance on the linear movement of the rack within the housing. The bearing also supports the rack and typically is adjustable to position the rack in proper meshing engagement with the pinion. The bearing, such as that disclosed in U.S. Pat. No. 6,247,375, utilizes a yoke with a bearing surface that is eccentric to the housing to support and adjust the rack into proper meshing engagement with the pinion. The yoke is installed into a housing of the power steering assembly. Once installed, the yoke is rotated thereby adjusting the support and positioning the rack in proper meshing engagement with the pinion. The yoke is then permanently staked or locked into position with a tool to deform the housing to support and secure the yoke in the rotated position. Since the yoke is staked into position the yoke and bearing support is not adjustable after the complete installation of the yoke into the assembly. Therefore the yoke does not allow for adjustment of the rack after the completed assembly of a vehicle, and further provides no adjustment during the operation of the power steering assembly.

Additional bearing designs such as the bearing disclosed in U.S. Pat. No. 6,435,050, utilizes a two-piece bearing design with a complex assembly involved to support the rack in the housing. The rack bearing is complex with a multiple piece bearing surface and additional bushings are needed to support the rack in proper meshing engagement with the pinion.

The rack and the pinion each include teeth in meshing engagement with each other. The teeth on the rack, the teeth on the pinion, the housing and the bearing wear as a result of continued repetitive use. As these various components wear, the meshing engagement between the rack and the pinion loosens, thereby causing undesirable noise and vibration in the vehicle. Therefore, some rack and pinion steering systems incorporate an adjustment mechanism to continuously adjust the position of the bearing relative to the housing, thereby re-positioning the rack relative to the pinion to compensate for wear on the rack, the pinion, the adjustment mechanism, the housing and the bearing, and provide for a tight meshing engagement between the rack and the pinion. However, the adjustment mechanism may over-tighten the meshing engagement between the rack and the pinion in response to rebound from a severe vibration, impact, load deflection, or when load reversal occurs.

EP 1 738 989 A1 discloses a steering apparatus according to the preamble of claim 1. Further prior art is known from post-published WO 2007/100815 A1, GB 2 333 079 A and EP 0 631 066 A1.

It is an object of the present invention to provide an improved steering apparatus.

### SUMMARY OF THE INVENTION

The object is solved by the subject matter of claim 1. Preferred embodiments are mentioned in the dependent claims.

The subject invention provides a steering apparatus for a vehicle. The steering apparatus comprises a housing. The housing defines a chamber having an inner surface. A gear system is supported by the housing. The gear system includes at least a first gear and a second gear in meshing engagement. A bearing is disposed within the chamber. The bearing supports at least one of the first gear and the second gear relative to the housing. The bearing is moveable relative to the housing for adjusting a position of one of the first gear and the second gear relative to another of the first gear and the second gear. An adjustment mechanism is coupled between the bearing and the housing. The adjustment mechanism continuously biases the bearing relative to the housing from an initial position to a second position in response to loosening of the meshing engagement between the first gear and the second gear. The adjustment mechanism repositions one of the first gear and the second gear relative to the other of the first gear and the second gear. A dampener is coupled to one of the bearing and the adjustment mechanism. The dampener resists the relative movement between the bearing and the adjustment mechanism to slow the re-positioning of one of the first gear and the second gear relative to the other of the first gear and the second gear.

Accordingly, the subject invention provides a rack and pinion steering apparatus having an adjustment mechanism to adjust the position of the rack relative to the pinion, thereby compensating for wear between the rack and the pinion. The dampener of the subject invention slows the reaction of the adjustment mechanism to transient conditions, to prevent over-tightening in response to rebound caused by a severe vibration, impact or load deflection event.

### BRIEF DESCRIPTION OF THE DRAWINGS

Other advantages of the present invention will be readily appreciated, as the same becomes better understood by reference to the following detailed description when considered in connection with the accompanying drawings wherein:

Figure 1 is a plan view of a housing for a first embodiment of a power steering apparatus;

Figure 2 is a cross sectional view of the first embodiment of the steering apparatus showing an eccentric rack bearing and an adjustment mechanism;

Figure 3 is an exploded perspective view of a first embodiment of a dampener for the first embodiment of the steering apparatus;

Figure 4 is a side plan view of the dampener for the first embodiment of the steering apparatus;

Figure 5 is a side plan view of a second embodiment of the power steering apparatus;

Figure 6 is a cross sectional view of the second embodiment of the power steering apparatus showing a yoke bearing and an adjustment mechanism; and

Figure 7 is a cross sectional view of an alternative first embodiment of the steering apparatus.

### DESCRIPTION OF THE PREFERRED EMBODIMENTS

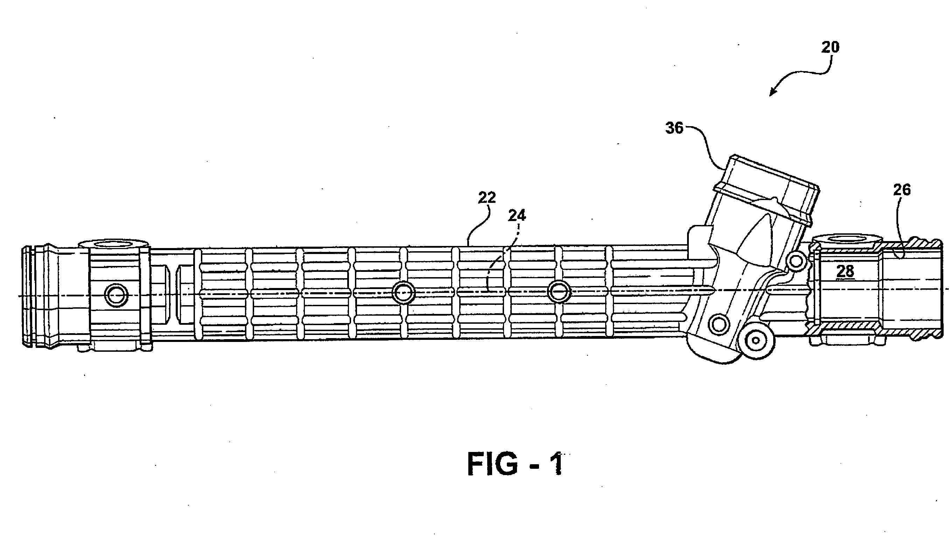

Referring to Figures 1 through 4, wherein like numerals indicate corresponding parts throughout the several views, a first embodiment of a power steering apparatus is generally shown at **20.**

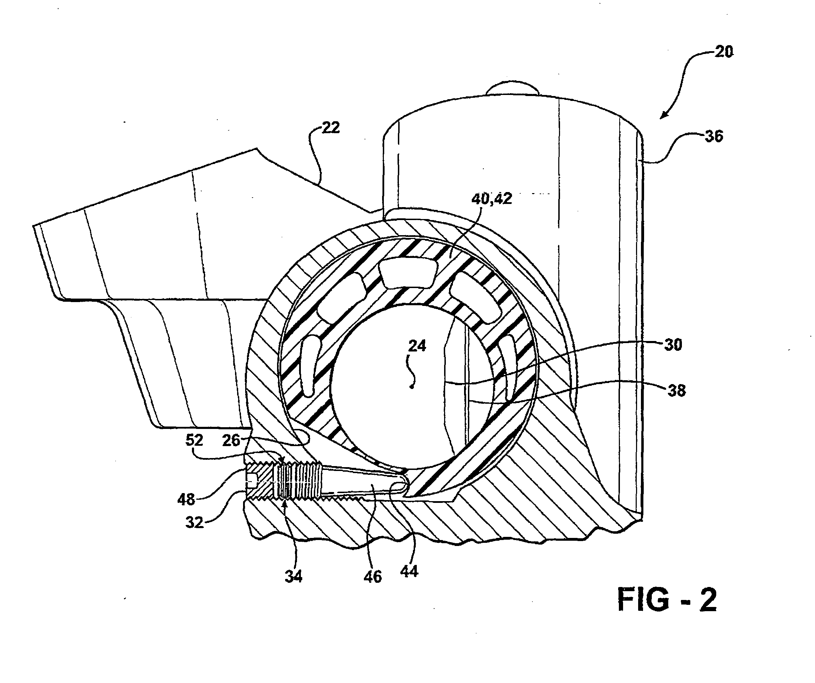

Referring to Figures 1 and 2, the first embodiment of the power steering apparatus includes a housing **22,** with the housing **22** defining a chamber **26.** The chamber **26** includes an inner surface **28.** A gear system **29** is supported by the housing **22.** The gear system **29** includes a first gear **30** and a second gear **38.** The first gear **30** and the second gear **38** are in meshing engagement with each other.

As described and shown herein, the gear system **29** includes a rack and pinion gear system **29.** However, it should be appreciated that the gear system **29** may include other types and configurations of gear systems **29,** with the housing being configured to support and accommodate the specific type of gear system **29** utilized. As shown and described herein, the first gear **30** includes a rack **30.** Accordingly, the housing and the chamber extends along a longitudinal axis **24.** The rack **30** is disposed within the chamber **26** and is moveable along the longitudinal axis **24.**

As described and shown herein, the second gear **38** of the gear system **29** includes a pinion **38.** The housing **22** supports the pinion **38** as is well known in a rack and pinion gear system **29.** The pinion extends into the chamber **26** for meshing engagement with the rack **30.**

The housing **22** defines an aperture **32** having threads. The aperture **32** extends into the chamber **26** for receiving an adjustment mechanism **34** (discussed in greater detail below). The housing **22** further includes an adjoining extension **36** that is connected to the chamber **26** and extends to rotatably support the pinion **38.** The adjoining extension **36,** and the pinion **38,** are disposed generally transverse to the longitudinal axis **24** and the chamber **26.**

The inner surface **28** defines two diameters, a first diameter having a center on the longitudinal axis **24** and a second diameter having a center on a second axis. The first diameter can be offset an amount which will vary depending on the design of the inner surface **28** and the bearing **40** to be supported within the inner surface **28.** However, as is known in the art the inner surface **28** of the housing **22** can have different diameters and configurations with varying offset distances between the longitudinal axis **24** and the second axis. It is also appreciated that there can be no offset, which will depend on the bearing **40** design, the rack **30** configuration, and the space and size constraints on the power steering apparatus within the given application. It is also appreciated by one skilled in the art that the inner surface **28** of the housing **22** can be configured to various geometries for supporting and locating the bearing **40,** and the rack **30** within the housing **22,** as will be further discussed below.

As described above, the rack **30** is disposed within the chamber **26** of the housing **22** and moves linearly along the longitudinal axis **24.** The rack **30** moves in response to rotational movement of the pinion **38** as is known in the art. The pinion **38** is rotatably supported in the adjoining extension **36** of the housing **22.** The rack **30** defines a plurality of teeth for meshing with the pinion **38** as is well known in the art. The rack **30** translates the rotational movement of the pinion **38** to a linear movement. In a typical application, such as a passenger vehicle, the pinion **38** is connected to the steering wheel (not shown) and rotates in relationship to a movement of the steering wheel by a driver. The rack **30** translates the rotational movement of the pinion **38** into the linear movement which is connected to and moves the steerable wheels of a vehicle, typically through a tie rod engaging each of the steerable wheels. As known in the art, the power steering apparatus typically includes an assisting force (not shown) to move the rack **30** within the housing **22.** The assisting force is commonly created by a mechanical system such as a hydraulic, an electric or various other assisting technologies as are known in the art.

At least one of the first gear **30** and the second gear **38** are supported by a bearing **40.** As described above, the first gear **30** includes the rack **30,** with the rack **30** being supported in the housing **22** by the bearing **40.** The bearing **40** is disposed within and engages the inner surface **28** of the chamber **26,** and is disposed about the rack **30.** The bearing **40** supports one of the first gear **30** and the second gear **38** relative to the housing **22.** The bearing **40** is moveable relative to the housing **22** to adjust a position of one of the first gear **30** and the second gear **38** relative to the other of the first gear **30** and the second gear **38.** As shown and described herein, the bearing **40** supports the rack **30** relative to the housing **22,** and is moveable relative to the housing **22** for adjusting a position of the rack **30** relative to the pinion **38.** The bearing **40** in the first embodiment of the power steering apparatus includes an eccentric rack bearing **42,** and includes a wall having a continuous varying radial thickness circumferentially surrounding the rack **30** in the housing **22.** The wall of the bearing **40** has an outer face and an inner face.

As described above, the wall of the eccentric rack bearing **42** includes the outer face and inner face. The outer face is defined by an outer radius. The outer face is generally circular and defines an external circumference having a first center point. The wall is further defined by the inner face having an inner radius. The inner face is generally circular and defines an internal circumference having a second center point. The second center point is spaced a distance from the first center point to define an amount of eccentricity between the outer circumference and the inner circumference which thereby defines the varying radial thickness of the wall. The varying radial thickness is gradual allowing for a gradual and smooth adjustment of the eccentric rack bearing **42** by the adjustment mechanism **34,** as discussed below.

The adjustment mechanism **34** is supported by the housing **22,** and is coupled between the eccentric rack bearing **42** and the housing **22.** The adjustment mechanism **34** continuously biases the eccentric rack bearing **42** relative to the housing **22** from an initial position to a second position in response to loosening of the meshing engagement between the first gear **30** and the second gear **38,** i.e., between the rack **30** and the pinion **38,** to re-position one of the first gear **30** and the second gear **38** relative to the other of the first gear **30** and the second gear **38,** i.e., to re-position the rack **30** relative to the pinion **38.** The adjustment mechanism **34** rotatably adjusts the eccentric rack bearing **42** relative to the longitudinal axis **24** to ensure tight meshing engagement between the pinion **38** and the rack **30.** It should be appreciated that as the various components wear down, the meshing engagement between the teeth on the pinion **38** and the teeth on the rack **30** loosens, thereby causing undesirable vibration and noise. Accordingly, the adjustment mechanism **34** rotates the eccentric rack bearing **42** about the longitudinal axis **24,** and by way of the eccentric wall thickness of the eccentric rack bearing **42,** re-positions the rack **30** relative to the pinion **38** to maintain the proper tight meshing engagement between the teeth on the rack **30** and the teeth on the pinion **38.**

The wall of the eccentric rack bearing **42** defines a seat **44.** The seat **44** is disposed near the outer face of the wall. The adjustment mechanism **34** engages the seat **44.** More specifically, the adjustment mechanism **34** of the first embodiment of the power steering apparatus includes a shaft **46,** with the shaft **46** including a first end abutting the seat **44.** The first end of the shaft **46** abuts the seat **44** in a generally tangential relationship relative to the eccentric rack bearing **42,** near an outer circumference of the eccentric rack bearing **42.** Accordingly, linear movement of the shaft **46** creates a torque in the eccentric rack bearing **42** about the longitudinal axis **24.** The torque in the eccentric rack bearing **42** rotates the eccentric rack bearing **42** about the longitudinal axis **24.**

As described above, the aperture **32** includes threads. The shaft **46** includes a second end having threads. The second end of the shaft **46** is in threaded engagement with the threads on the aperture **32.** The threaded engagement between the shaft **46** and the aperture **32** provides for rotational movement of the shaft **46** relative to the housing **22,** which translates into linear movement of the shaft **46** along an axis of the aperture **32** relative to the housing **22.**

A plug **48** is disposed within the aperture **32** and fixedly attached to the housing **22.** Preferably, the plug **48** is in threaded engagement with the aperture **32,** and includes a setscrew. However, it should be appreciated that the plug **48** may include some other device affixed to the housing **22** within the aperture **32** to seal the aperture **32.** Preferably, a locking mechanism fixedly secures the plug **48** within the aperture **32** to prevent rotation of the plug **48** relative to the housing **22.** The locking mechanism may include a staking device, a jam nut, a thread adhesive, or some other suitable device. During assembly of the power steering apparatus, the plug **48** is threaded into the aperture **32** to a desired position, which corresponds to a desired initial position of the rack **30** and the bearing **40.** After the plug **48** is properly positioned within the aperture **32,** the locking device is positioned, applied or attached to securely fix the position of the plug **48** relative to the housing **22.**

A dampener **52** is coupled to one of the eccentric rack bearing **42** and the adjustment mechanism **34.** The dampener **52** resists the relative movement between the eccentric rack bearing **42** and the adjustment mechanism **34,** thereby slowing the re-positioning of one of the first gear **30** and the second gear **38** relative to the other of the first gear **30** and the second gear **38,** i.e., to slow the re-positioning of the rack **30** relative to the pinion **38.** Accordingly, the dampener **52** prevents the adjustment mechanism **34** from moving the eccentric rack bearing **42** too quickly in response to rebound from a severe vibration, an impact, a load deflection or when a load reversal occurs. As such, the dampener **52** limits the re-positioning of the eccentric rack bearing **42** to a very slow rate. This permits the adjustment mechanism **34** to compensate for the wear between the various components, while preventing over-tightening of the rack **30** and the pinion **38.**

The dampener **52** includes a plastic fluid. A plastic fluid is a fluid in which the viscosity of the fluid is reduced under shear stress. Preferably, the plastic fluid includes a thixotropic fluid. A thixotropic fluid is a fluid in which, after a sufficient force to shear the fluid is applied, the viscosity of the fluid drops and approaches that of the base lubricant, however, prior to the sufficient shear force being applied, the fluid maintains its high viscosity and is highly resistant to movement or a change in form. Preferably, the thixotropic fluid includes a grease having a high apparent viscosity. However, it should be appreciated that the plastic fluid may include some other suitable fluid.

Preferably, the plastic fluid includes a worked penetration of less than 175 mm. More preferably, the plastic fluid includes a worked penetration of less than 115 mm. The worked penetration of the plastic fluid is measured using a cone penetration test. The cone penetration test is described in ASTM D217.

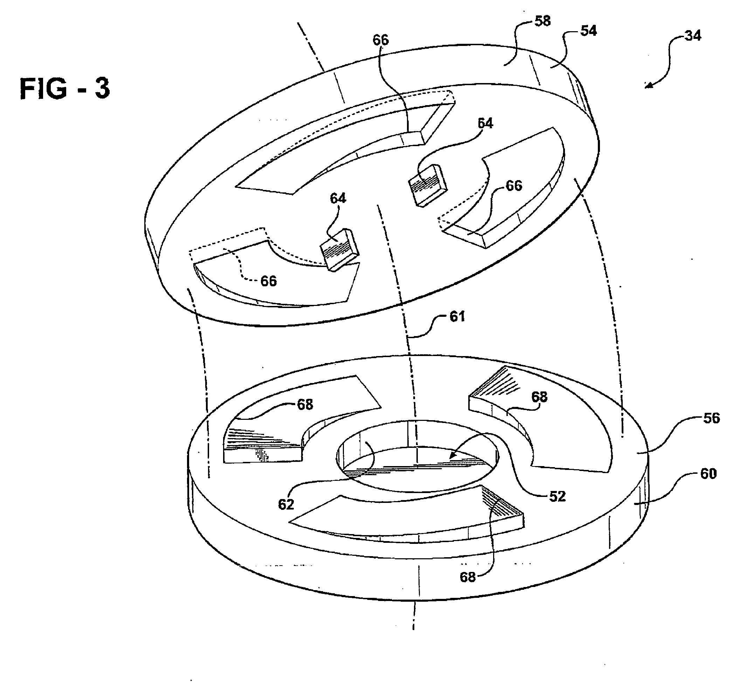

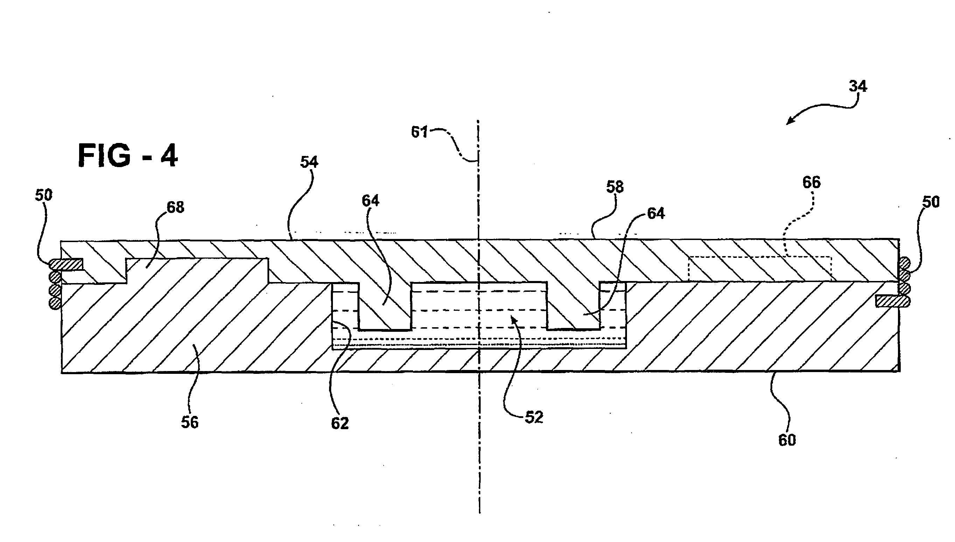

Referring to Figures 3 and 4, the dampener **52** includes a first member **54** and a second member **56** moveable relative to the first member **54** with the plastic fluid disposed between the first member **54** and the second member **56.** As shown in the first embodiment of the power steering apparatus, the dampener **52** is disposed within the aperture **32.** The dampener **52** includes a first plate **58** engaging the shaft **46** and a second plate **60** coupled to the housing **22.** Accordingly, in the first embodiment of the power steering apparatus **20,** the first member **54** includes the first plate **58** and the second member **56** includes the second plate **60.** The first plate **58** is rotatable about a central axis **61** relative to the second plate **60,** and is axially moveable along the central **61** axis relative to the second plate **60** in response to rotation about the central axis **61.**

The second plate **60** defines a cavity **62** with the plastic fluid disposed within the cavity **62.** The first plate **58** includes at least one paddle **64** extending into the cavity **62** along the central axis **61.** Preferably and as shown, the at least one paddle **64** includes a pair of paddles **64.** The paddles **64** engage the plastic fluid within the cavity **62,** with the plastic fluid resisting movement of the at least one paddle **64.** Accordingly, the interaction between the plastic fluid and the paddles **64** prevents the first plate **58** from moving to quickly relative to the second plate **60,** thereby slowing adjustment or damping of the eccentric rack bearing **42.**

In the first embodiment of the power steering apparatus, one of the first plate **58** and the second plate **60** includes a first ramp **66** extending along the central axis **61** in a first direction. Another of the first plate **58** and the second plate **60** includes a second ramp **68** opposing the first ramp **66** and extending along the central axis **61** in a second direction opposite the first direction. The second ramp **68** opposes the first ramp **66** for sliding engagement with the first ramp **66.** The sliding engagement between the first ramp **66** and the second ramp **68** spreads the first plate **58** and the second plate **60** relative to each other to move the first plate **58** axially along the central axis **61** relative to the second plate **60** as the first plate **58** rotates relative to the second plate **60.**

The dampener **52** includes a spring **50** interconnecting the first plate **58** and the second plate **60** for rotating the first plate **58** relative to the second plate **60.** Preferably, the spring **50** includes a torsion spring **50.** However, it should be appreciated that the spring **50** may include some other type of spring **50** capable of causing rotation of the first plate **58** relative to the second plate **60.** As described above, it should be appreciated that the adjustment mechanism **34** and the dampener **52** are integrated into a single device. However, it should be appreciated that the adjustment mechanism **34** and the dampener **52** may include independent and separate devices.

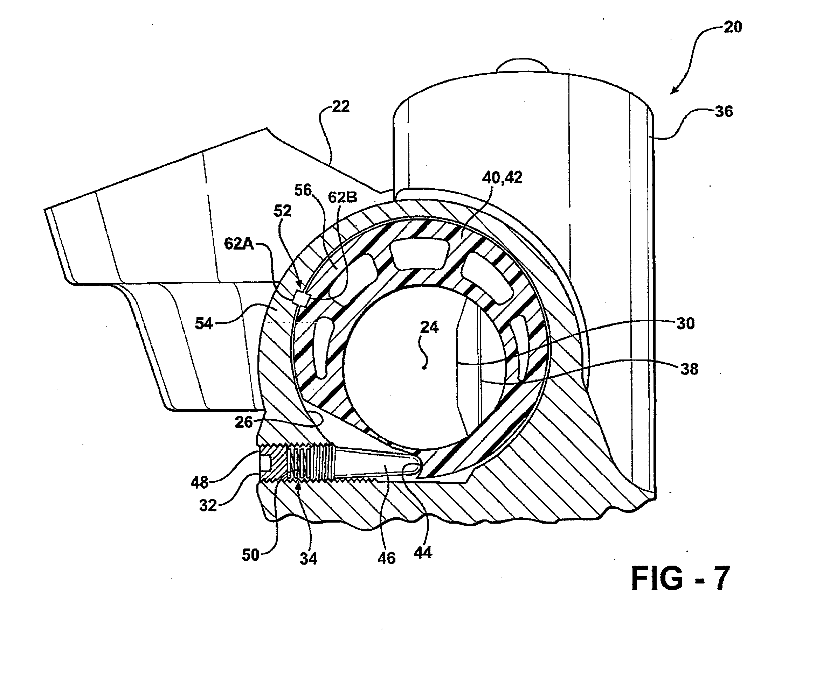

Alternatively, referring to Figure 7, it should be appreciated that the plastic fluid may be disposed between the eccentric rack bearing **42** and the housing **22** to resist movement of the eccentric rack bearing **42** relative to the housing **22.** In which case, the housing **22** may include the first member **54** and the eccentric rack bearing **42** may include the second member **56.** The first member **54** includes a first cavity **62A** and the second member **56** includes a second cavity **62B** opposing the first cavity **62A.** The second cavity **62B** is moveable relative to the first cavity **62A.** The plastic fluid is disposed within the first cavity **62A** and the second cavity **62B.** Accordingly, the plastic fluid within the first cavity **62A** must move relative to the plastic fluid within the second cavity **62B.** However, the high viscosity of the plastic fluid interconnecting the first cavity **62A** and the second cavity **62B** prevents quick movement therebetween.

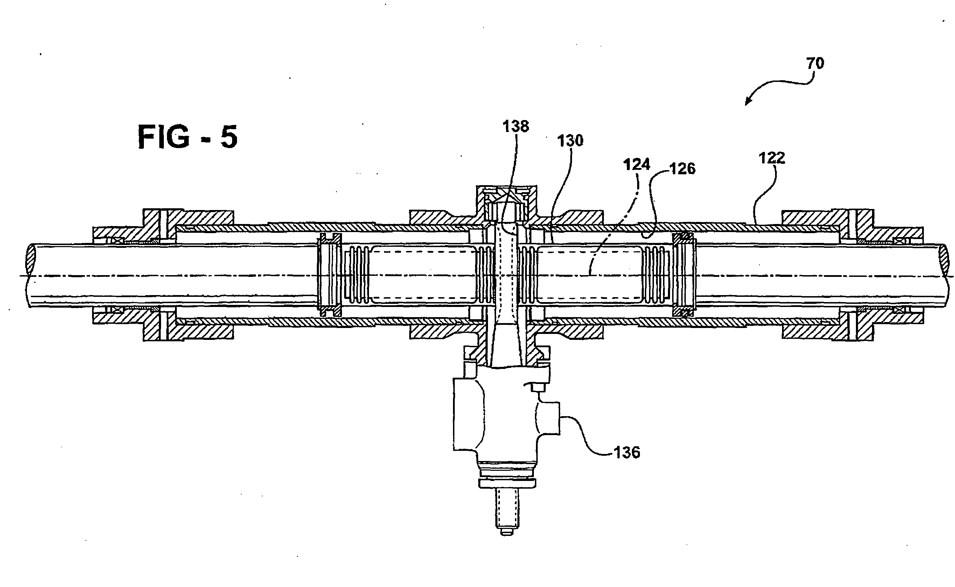

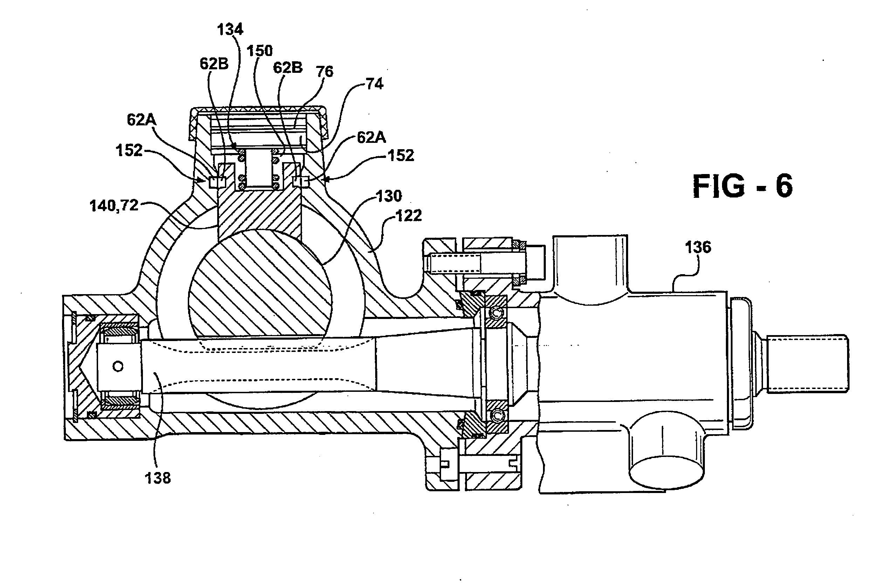

Referring to Figures 5 and 6, a second embodiment of the power steering apparatus is shown generally at **70.** The reference numerals of the second embodiment of the power steering apparatus **70** referring to similar components and/or features previously described for the first embodiment of the power steering apparatus **20** are identified with the same reference numerals utilized for the first embodiment of the power steering apparatus **20** preceded by the numeral 1. For example, the housing **22** of the first embodiment of the power steering apparatus **20** is referenced with the reference numeral **122** in the second embodiment of the power steering apparatus **70.** The bearing **140** of the second embodiment of the power steering apparatus **70** includes a yoke bearing **72** as in well known in the art. In the second embodiment of the power steering apparatus **70,** the housing **122** defines a bore **74,** with the yoke bearing **72** being disposed within the bore **74** for supporting the rack **130.**

A cap **76** is fixedly attached to the housing **122.** The cap **76** is disposed within the bore **74.** The adjustment mechanism **134** includes a spring **150** disposed within the bore **74** between the cap **76** and the yoke bearing **72.** Preferably, the spring **150** includes a coil spring **150.** The spring **150** biases against the yoke bearing **72** to urge the yoke bearing **72** and thereby the rack **130** into engagement with the pinion **138.**

The dampener **152** is disposed between the yoke bearing **72** and the bore **74.** The dampener **152** of the second embodiment of the power steering apparatus **70** includes the plastic fluid having the cone penetration of less than 175 mm as measured by ASTM D217 as described above for the first embodiment of the power steering apparatus **20.**

The bore **74** defines the first cavity **162A** and the yoke bearing **72** defines the second cavity **162B** opposing the first cavity **162B.** The second cavity **162B** being moveable relative to the first cavity **162A.** The plastic fluid is disposed within the first cavity **162A** and the second cavity **162B** to resist movement of the yoke bearing **72** relative to the housing **122.** It should therefore be apparent that the dampener **52, 152** of the subject invention may be utilized in several different embodiments of the power steering apparatus.

The invention has been described in an illustrative manner, and it is to be understood that the terminology which has been used is intended to be in the nature of words of description rather than of limitation. As is now apparent to those skilled in the art, many modifications and variations of the present invention are possible in light of the above teachings. It is, therefore, to be understood that within the scope of the appended claims, wherein reference numerals are merely for convenience and are not to be in any way limiting, the invention may be practiced otherwise than as specifically described.

## Claims

1. A steering apparatus for a vehicle, said apparatus comprising:
a housing **(22, 122)** defining a chamber **(26, 126)** having an inner surface **(28, 128);**
a gear system **(29)** supported by said housing **(22, 122)** and having at least a first gear **(30, 130)** and a second gear **(38, 138)** in meshing engagement;
a bearing **(40, 42, 72)** disposed within said chamber **(26, 126)** and supporting at least one of said first gear **(30, 130)** and said second gear **(38, 138)** relative to said housing **(22, 122)** and moveable relative to said housing **(22,122)** for adjusting a position of one of said first gear **(30, 130)** and said second gear **(38, 138)** relative to another of said first gear **(30, 130)** and said second gear **(38, 138);**
an adjustment mechanism **(34, 134)** coupled between said bearing **(40, 42, 72)** and said housing **(22, 122)** for continuously biasing said bearing **(40, 42, 72)** relative to said housing **(22, 122)** from an initial position to a second position in response to loosening of said meshing engagement between said first gear **(30, 130)** and said second gear **(38, 138)** to reposition one of said first gear **(30, 130)** and said second gear **(38, 138)** relative to the other of said first gear **(30, 130)** and said second gear **(38, 138);**
a dampener **(52, 152)** coupled to one of said bearing **(40, 42, 72)** and said adjustment mechanism **(34, 134)** for resisting said relative movement between said bearing **(40, 42, 72)** and said adjustment mechanism **(34, 134)** to slow said re-positioning of one of said first gear **(30, 130)** and said second gear **(38, 138)** relative to the other of said first gear **(30, 130)** and said second gear **(38, 138),**
**characterized in that**
said dampener **(52, 152)** includes a plastic fluid and a first member **(54)** and a second member **(56)** moveable relative to said first member **(54)** and
said first member **(54)** includes a first cavity **(62A)** and said second member **(56)** includes a second cavity **(62B)** opposing said first cavity **(62A)** and moveable relative to said first cavity **(62A)** with said plastic fluid disposed within said first cavity **(62A)** and said second cavity **(62B).**

2. An apparatus as set forth in claim 1 wherein said housing **(22)** includes said first member **(54)** and said bearing **(40, 42)** includes said second member **(56).**

3. An apparatus as set forth in claim 1 wherein said housing and said chamber extend along a longitudinal axis **(24)** and wherein said first gear **(30, 130)** includes a rack **(30, 130)** disposed within said chamber **(26, 126)** for movement along said longitudinal axis **(24, 124)** and said second gear **(38, 138)** includes a pinion **(38, 138)** supported by said housing **(22, 122)** and extending into said chamber **(26, 126)** for meshing engagement with said rack **(30, 130);**
wherein said bearing **(40, 42)** includes an eccentric rack bearing **(42)** and wherein said housing **(22)** defines an aperture **(32)** and said adjustment mechanism **(34)** includes a shaft **(46)** in threaded engagement with said aperture **(32)** and abutting said eccentric rack bearing **(42);** and
wherein said dampener **(52)** is disposed within said aperture **(32)** and includes a first plate **(58)** engaging said shaft **(46)** and a second plate **(60)** coupled to said housing **(22)** with said first plate **(58)** rotatable about a central axis **(61)** relative to said second plate **(60)** and axially moveable along said central axis **(61)** relative to said second plate **(60)** in response to rotation about said central axis **(61).**

4. An apparatus as set forth in claim 3 wherein said second plate **(60)** defines a cavity **(62)** with said plastic fluid disposed within said cavity **(62)** and said first plate **(58)** includes at least one paddle **(64)** extending into said cavity **(62)** along said central axis **(61)** for engaging said plastic fluid with said plastic fluid resisting movement of said at least one paddle **(64).**

5. An apparatus as set forth in claim 4 wherein one of said first plate **(58)** and said second plate **(60)** includes a first ramp **(66)** extending along said central axis **(61)** in a first direction and another of said first plate **(58)** and said second plate **(60)** includes a second ramp **(68)** opposing said first ramp **(66)** and extending along said central axis **(61)** in a second direction opposite said first direction for sliding engagement with said first ramp **(66)** to move said first plate **(58)** axially along said central axis **(61)** relative to said second plate **(60)** as said first plate **(58)** rotates relative to said second plate **(60).**

6. An apparatus as set forth in claim 5 wherein said dampener **(52)** includes a spring **(50)** interconnecting said first plate **(58)** and said second plate **(60)** for rotating said first plate **(58)** relative to said second plate **(60).**

7. An apparatus as set forth in claim 1 wherein said housing and said chamber extend along a longitudinal axis **(24)** and wherein said first gear **(30, 130)** includes a rack **(30, 130)** disposed within said chamber **(26, 126)** for movement along said longitudinal axis **(24, 124)** and said second gear **(38, 138)** includes a pinion **(38, 138)** supported by said housing **(22, 122)** and extending into said chamber **(26, 126)** for meshing engagement with said rack **(30, 130);**
wherein said housing **(122)** defines a bore **(74)** and said bearing **(40, 72)** includes a yoke bearing **(72)** disposed within said bore **(74)** for supporting said rack **(130);**
wherein said apparatus further comprises a cap **(76)** fixedly attached to said housing **(122)** and disposed within said bore **(74);**
wherein said adjustment mechanism **(134)** includes a spring **(150)** disposed within said bore **(74)** between said cap **(76)** and said yoke bearing **(72)** for biasing against said yoke bearing **(72);** and
wherein said dampener **(152)** is disposed between said yoke bearing **(72)** and said bore **(74).**

## Patentansprüche

1. Lenkvorrichtung für ein Fahrzeug, wobei die Vorrichtung umfasst:
ein Gehäuse (22, 122), das eine Kammer (26, 126) mit einer Innenfläche (28, 128) definiert;
ein Zahnradsystem (29), das von dem Gehäuse (22, 122) abgestützt ist und zumindest ein erstes Zahnrad (30, 130) und ein zweites Zahnrad (38, 138) in kämmendem Eingriff aufweist;
ein Lager (40, 42, 72), das in der Kammer (26, 126) angeordnet ist und zumindest eines von dem ersten Zahnrad (30, 130) und dem zweiten Zahnrad (38, 138) relativ zu dem Gehäuse (22, 122) abstützt und relativ zu dem Gehäuse (22, 122) bewegbar ist, um eine Position von einem von dem ersten Zahnrad (30, 130) und dem zweiten Zahnrad (38, 138) relativ zu dem anderen von dem ersten Zahnrad (30, 130) und dem zweiten Zahnrad (38, 138) einzustellen;
einen Einstellmechanismus (34, 134), der zwischen das Lager (40, 42, 72) und das Gehäuse (22, 122) geschaltet ist, um das Lager (40, 42, 72) relativ zu dem Gehäuse (22, 122) von einer Anfangsposition zu einer zweiten Position in Ansprechen auf ein Lockern des kämmenden Eingriffs mit zwischen dem ersten Zahnrad (30, 130) und dem zweiten Zahnrad (38, 138) kontinuierlich vorzuspannen, um eines von dem ersten Zahnrad (30, 130) und dem zweiten Zahnrad (38, 138) relativ zu dem anderen von dem ersten Zahnrad (30, 130) und dem zweiten Zahnrad (38, 138) umzupositionieren;
einen Dämpfer (52, 152), der mit einem von dem Lager (40, 42, 72) und dem Einstellmechanismus (34, 134) gekoppelt ist, um der Relativbewegung zwischen dem Lager (40, 42, 72) und dem Einstellmechanismus (34, 134) Widerstand entgegenzubringen, um die Umpositionierung von einem von dem ersten Zahnrad (30, 130) und dem zweiten Zahnrad (38, 138) relativ zu dem anderen von dem ersten Zahnrad (30, 130) und dem zweiten Zahnrad (38, 138) zu verlangsamen,
**dadurch gekennzeichnet, dass:**
der Dämpfer (52, 152) ein plastisches Fluid und ein erstes Element (54) und ein relativ zu dem ersten Element (54) bewegbares, zweites Element (56) umfasst, und
das erste Element (54) einen ersten Hohlraum (62A) umfasst, und das zweite Element (56) einen zweiten Hohlraum (62B) umfasst, der dem ersten Hohlraum (62A) gegenüber liegt und relativ zu dem ersten Hohlraum (62A) bewegbar ist, wobei das plastische Fluid in dem ersten Hohlraum (62A) und dem zweiten Hohlraum (62B) angeordnet ist.

2. Vorrichtung nach Anspruch 1,
wobei das Gehäuse (22) das erste Element (54) umfasst, und das Lager (40, 42) das zweite Element (56) umfasst.

3. Vorrichtung nach Anspruch 1,
wobei das Gehäuse und die Kammer sich entlang einer Längsachse (24) erstrecken, und wobei das erste Zahnrad (30, 130) eine Zahnstange (30, 130) umfasst, die in der Kammer (26, 126) zur Bewegung entlang der Längsachse (24, 124) angeordnet ist, und das zweite Zahnrad (38, 138) ein Ritzel (38, 138) umfasst, das von dem Gehäuse (22, 122) abgestützt ist und sich in die Kammer (26, 126) hinein zum kämmenden Eingriff mit der Zahnstange (30, 130) erstreckt;
wobei das Lager (40, 42) ein exzentrisches Zahnstangenlager (42) umfasst, und wobei das Gehäuse (22) eine Durchbrechung (32) definiert, und der Einstellmechanismus (34) eine Welle (46) umfasst, die in Gewindeeingriff mit der Durchbrechung (32) steht und an dem exzentrischen Zahnstangenlager (42) anschlägt; und
wobei der Dämpfer (52) in der Durchbrechung (32) angeordnet ist und eine erste Platte (58), die mit der Welle (46) in Eingriff steht, und eine zweite Platte (60) umfasst, die mit dem Gehäuse (22) gekoppelt ist, wobei die erste Platte (58) um eine Mittelachse (61) relativ zu der zweiten Platte (60) drehbar und axial entlang der Mittelachse (61) relativ zu der zweiten Platte (60) in Ansprechen auf eine Drehung um die Mittelachse (61) bewegbar ist.

4. Vorrichtung nach Anspruch 3,
wobei die zweite Platte (60) einen Hohlraum (62) definiert, wobei das plastische Fluid in den Hohlraum (62) angeordnet ist, und die erste Platte (58) zumindest ein Paddel (64) umfasst, das sich in dem Hohlraum (62) entlang der Mittelachse (61) erstreckt, um mit dem plastischen Fluid in Eingriff zu stehen, wobei das plastische Fluid einer Bewegung des zumindest einen Paddels (64) Widerstand entgegen bringt.

5. Vorrichtung nach Anspruch 4,
wobei eine von der ersten Platte (58) und der zweiten Platte (60) eine erste Rampe (66) umfasst, die sich entlang der Mittelachse (61) in einer ersten Richtung erstreckt, und eine andere von der ersten Platte (58) und der zweiten Platte (60) eine zweite Rampe (68) umfasst, die der ersten Rampe (66) gegenüber liegt und sich entlang der Mittelachse (61) in einer zweiten Richtung entgegengesetzt zu der ersten Richtung für einen Gleiteingriff mit der ersten Rampe (66) erstreckt, um die erste Platte (58) axial entlang der Mittelachse (61) relativ zu der zweiten Platte (60) zu bewegen, wenn die erste Platte (58) relativ zu der zweiten Platte (60) rotiert.

6. Vorrichtung nach Anspruch 5,
wobei der Dämpfer (52) eine Feder (50) umfasst, die die erste Platte (58) und die zweite Platte (60) verbindet, um die erste Platte (58) relativ zu der zweiten Platte (60) zu rotieren.

7. Vorrichtung nach Anspruch 1,
wobei das Gehäuse und die Kammer sich entlang einer Längsachse (24) erstrecken, und wobei das erste Zahnrad (30, 130) eine Zahnstange (30, 130) umfasst, die in der Kammer (26, 126) zur Bewegung entlang der Längsachse (24, 124) angeordnet ist, und das zweite Zahnrad (38, 138) ein Ritzel (38, 138) umfasst, das von dem Gehäuse (22, 122) abgestützt ist und sich in die Kammer (26, 126) hinein zum kämmenden Eingriff mit der Zahnstange (30, 130) erstreckt;
wobei das Gehäuse (122) eine Bohrung (74) definiert und das Lager (40, 72) ein Jochlager (72) umfasst, das in der Bohrung (74) angeordnet ist, um die Zahnstange (130) abzustützen;
wobei die Vorrichtung ferner eine Kappe (76) umfasst, die fest an dem Gehäuse (122) angebracht und in der Bohrung (74) angeordnet ist;
wobei der Einstellmechanismus (134) eine Feder (150) umfasst, die in der Bohrung (74) zwischen der Kappe (76) und dem Jochlager (72) zur Vorspannung gegen das Jochlager (72) angeordnet ist; und
wobei der Dämpfer (152) zwischen dem Jochlager (72) und der Bohrung (74) angeordnet ist.

## Revendications

1. Appareil de direction pour un véhicule, ledit appareil comprenant :
un boîtier (22, 122) définissant une chambre (26, 126) ayant une surface intérieure (28, 128) ;
un système d'engrenages (29) supporté par ledit boîtier (22, 122) et ayant au moins un premier engrenage (30, 130) et un second engrenage (38, 138) en engagement d'engrènement ;
un palier (40, 42, 72) disposé à l'intérieur de ladite chambre (26, 126) et supportant l'un au moins dudit premier engrenage (30, 130) et dudit second engrenage (38, 138) par rapport audit boîtier (22, 122) et mobile par rapport audit boîtier (22, 122) pour ajuster une position de l'un dudit premier engrenage (30, 130) et dudit second engrenage (38, 138) par rapport à l'autre dudit premier engrenage (30, 130) et dudit second engrenage (38, 138) ;
un mécanisme d'ajustement (34, 134) couplé entre ledit palier (40, 42, 72) et ledit boîtier (22, 122) pour solliciter continuellement ledit palier (40, 42, 72) par rapport audit boîtier (22, 122) depuis une position initiale vers une seconde position en réponse à un relâchement dudit engagement d'engrènement entre ledit premier engrenage (30, 130) et ledit second engrenage (38, 138) pour repositionner l'un parmi ledit premier engrenage (30, 130) et ledit second engrenage (38, 138) par rapport à l'autre dudit premier engrenage (30, 130) et dudit second engrenage (38, 138) ;
un amortisseur (52, 152) couplé à l'un parmi ledit palier (40, 42, 72) et ledit mécanisme d'ajustement (34, 134) pour résister audit mouvement relatif entre ledit palier (40, 42, 72) et ledit mécanisme d'ajustement (34, 134) pour ralentir ledit repositionnement de l'un parmi ledit premier engrenage (30, 130) et ledit second engrenage (38, 138) par rapport à l'autre dudit premier engrenage (30, 130) et dudit second engrenage (38, 138),
**caractérisé en ce que**
ledit amortisseur (52, 152) inclut un fluide plastique et un premier élément (54) et un second élément (56) mobile par rapport audit premier élément (54), et
ledit premier élément (54) inclut une première cavité (62A) et ledit second élément (56) inclut une seconde cavité (62B) à l'opposé de ladite première cavité (62A) et mobile par rapport à ladite première cavité (62A), avec ledit fluide plastique disposé dans ladite première cavité (62A) et ladite seconde cavité (62B).

2. Appareil selon la revendication 1, dans lequel ledit boîtier (22) inclut ledit premier élément (54) et ledit palier (40, 42) inclut ledit second élément (56).

3. Appareil selon la revendication 1, dans lequel ledit boîtier et ladite chambre s'étendent le long d'un axe longitudinal (24), et dans lequel ledit premier engrenage (30, 130) inclut une crémaillère (30, 130) disposée à l'intérieur de ladite chambre (26, 126) pour un mouvement le long dudit axe longitudinal (24, 124), et ledit second engrenage (38, 138) inclut un pignon (38, 138) supporté par ledit boîtier (22, 122) et s'étendant jusque dans ladite chambre (26, 126) pour venir en engagement d'engrènement avec ladite crémaillère (30, 130) ;
dans lequel ledit palier (40, 42) inclut un palier de crémaillère excentrique (42), et dans lequel ledit boîtier (22) définit une ouverture (32) et ledit mécanisme d'ajustement (34) inclut un arbre (46) en engagement vissé avec ladite ouverture (32) et en butée contre ledit palier de crémaillère excentrique (42) ; et
dans lequel ledit amortisseur (52) est disposé dans ladite ouverture (32) et inclut une première plaque (58) qui engage ledit arbre (46) et une seconde plaque (60) couplée audit boîtier (22), ladite première plaque (58) étant capable de rotation autour d'un axe central (61) par rapport à ladite seconde plaque (60) et axialement mobile le long dudit axe central (61) par rapport à ladite seconde plaque (60) en réponse à une rotation autour dudit axe central (61).

4. Appareil selon la revendication 3, dans lequel ladite seconde plaque (60) définit une cavité (62) avec ledit fluide plastique disposé dans ladite cavité (62) et ladite première plaque (58) inclut au moins une pale (64) qui s'étend dans ladite cavité (62) le long dudit axe central (61) pour engager ledit fluide plastique de sorte que ledit fluide plastique résiste à un mouvement de ladite au moins une pale (64).

5. Appareil selon la revendication 4, dans lequel une parmi ladite première plaque (58) et ladite seconde plaque (60) inclut une première rampe (66) le long dudit axe central (61) dans une première direction et une autre parmi ladite première plaque (58) et ladite seconde plaque (60) inclut une seconde rampe (68) opposée à ladite première rampe (66) et s'étendant le long dudit axe central (61) dans une seconde direction opposée à ladite première direction pour un engagement de coulissement avec ladite première rampe (66) pour déplacer ladite première plaque (58) axialement le long dudit axe central (61) par rapport à ladite seconde plaque (60) lorsque ladite première plaque (58) tourne par rapport à ladite seconde plaque (60).

6. Appareil selon la revendication 2, dans lequel ledit amortisseur (52) inclut un ressort (50) qui établit une interconnexion de ladite première plaque (58) et de ladite seconde plaque (60) pour faire tourner ladite première plaque (58) par rapport à ladite seconde plaque (60).

7. Appareil selon la revendication 1, dans lequel ledit boîtier et ladite chambre s'étendent le long d'un axe longitudinal (24), et dans lequel ledit premier engrenage (30, 130) inclut une crémaillère (60, 130) disposée dans ladite chambre (26, 126) pour un mouvement le long dudit axe longitudinal (24, 124), et ledit second engrenage (38, 138) inclut un pignon (38, 138) supporté par ledit boîtier (122) et s'étendant jusque dans ladite chambre (26, 126) pour un engagement d'engrènement avec ladite crémaillère (30, 130) ;
dans lequel ledit boîtier (122) définit un perçage (74) et ledit palier (40, 72) inclut un palier à étrier (72) disposé dans ledit perçage (74) pour supporter ladite crémaillère (130) ;
dans lequel ledit appareil comprend en outre un capuchon (76) attaché de manière fixe audit boîtier (122) et disposé dans ledit perçage (74) ; dans lequel ledit mécanisme d'ajustement (134) inclut un ressort (150) disposé dans ledit perçage (74) entre le capuchon et ledit palier (72) pour sa sollicitation contre ledit palier à étrier (72) ; et
dans lequel ledit amortisseur (152) est disposé entre ledit palier à étrier (72) et ledit perçage (74).
